# EUROPÄISCHE PATENTSCHRIFT

(11) **EP 0 303 645 B1**
(45) Veröffentlichungstag und Bekanntmachung des Hinweises auf die Patenterteilung: **15.12.1993**
(21) Anmeldenummer: 88901587.1
(22) Anmeldetag: 09.02.1988
(51) Int. Cl.: C08G 18/10, C08G 18/32

(54) **Verfahren zur Herstellung eines Hitze-und Feuchtigkeitshärtenden Einkomponenten-Polyurethan-Dicht und Klebemittels.**
Process for preparation of a heat and moisture curable one component polyuretthane sealant and a adhesive.
Procédé de préparation d'un joint et d'un adhésif en polyuréthane,à un composant et réticulable sous l'action de la chaleur et de l'humidité.

(30) Priorität: 20.02.1987 DE 3705427
(43) Veröffentlichungstag der Anmeldung: 22.02.1989
(73) Patentinhaber: Teroson GmbH, 69046 Heidelberg (DE)
(72) Erfinder: DUCK, Edward, W., D-6905 Leimen-Gauangelloch (DE); SCHEFFLER, Ingolf, D-6908 Wiesloch (DE); HIRTHAMMER, Michael, D-6900 Heidelberg (DE); BLANK, Norman, D-6900 Heidelberg (DE)
(74) Vertreter: UEXKÜLL & STOLBERG
(86) Internationale Anmeldenummer: EP8800093
(87) Internationale Veröffentlichungsnummer: WO8806165

(56) Entgegenhaltungen:
- EP-A- 0 100 508
- EP-A- 0 255 572
- DE-A- 2 651 479
- DE-A- 3 023 202
- GB-A- 1 108 727
- US-A- 4 083 901
- US-A- 4 247 676

## Beschreibung

Es sind bereits zahlreiche Formulierungen für einkomponentige Dicht- und Klebmittel bekannt, welche Präpolmere mit telechelen Isocyanatgruppen (hergestellt aus Diisocyanaten im stöchiometrischen Überschuß mit Polyolen) enthalten und welche unter dem Einfluß von Feuchtigkeit härten. Bei Verwendung von aromatischen Isocyanaten werden diesen Systemen Katalysatoren, wie insbesondere Zinnverbindungen zur Beschleunigung der Härtung zugesetzt.

Solche einkomponentigen PU-Systeme finden u.a. auch im Automobilbau zur Direktverglasung von Kraftfahrzeugen Verwendung. Schwierigkeiten können jedoch auftreten, wenn die Luftfeuchtigkeit gering ist, insbesondere bei tieferen Außentemperaturen im Winterhalbjahr. Die Härtung der Dichtmittel erfolgt dann so langsam, daß die eingesetzten Scheiben längere Zeit mit Hilfe geeigneter Spannvorrichtungen gehalten werden müssen. Weitere Montagearbeiten, z.B. das Anschlagen der Türen oder Arbeiten unter Kippen der Karosserie können nicht durchgeführt werden, solange das Dichtmittel noch nicht ausreichend gehärtet ist.

Zweikomponentige PU-Systeme vermögen zwar schnell zu härten, ihre Handhabung ist jedoch wesentlich komplizierter und apparativ viel aufwendiger.

Es besteht somit ein Bedarf für ein einkomponentiges Dicht- und Klebmittel auf Polyurethanbasis, welches rasch soweit gehärtet werden kann, daß eine ausreichende mechanische Stabilität erreicht wird. Die vollständige Aushärtung, beispielsweise unter Feuchtigkeitseinfluß könnte dagegen längere Zeit beanspruchen, ohne daß dadurch die Montagearbeiten beeinträchtigt werden, obwohl auch hier eine raschere Härtung vorteilhaft wäre.

Zur Lösung der vorstehenden Probleme wird mit der Erfindung ein Verfahren zur Herstellung eine. Dicht- und Klebmittels vorgeschlagen, welches sowohl hitze- als auch feuchtigkeitshärtend ist, so daß es durch kurzzeitiges Erhitzen partiell ausgehärtet werden kann und anschließend mit Feuchtigkeit bei Raumtemperatur weiter aushärtet.

Die bekannten feuchtigkeitshärtenden PU-Systeme werden durch Wärme allein nur wenig beschleunigt` Andererseits ist es zwar aus der US-A-37 55 261 und der US-A-42 47 676 bekannt, daß Präpolymere mit endständigen Isocyanatgruppen bei erhöhter Temperatur vernetzt werden können, wenn man ihnen eine stöchiometrische Menge einer Komplexverbindung aus Methylendianilin und Natriumchlorid zusetzt. Bei höheren Temperaturen dissoziiert dieser Komplex in das freie Methylendianilin und Natriumchlorid, und das Methylendianilin reagiert mit den Isocyanatgruppen des Präpolymeren zu einem vernetzten Harnstoff. Bei Raumtemperatur soll dieses Gemisch lagerstabil sein. Es werden in der US-PS keinerlei Hinweise auf Feuchtigkeitshärtung gegeben. Außerdem ist bekannt, daß sich derartige PU-Systeme mit Hilfe von Mikrowellen erhitzen und dadurch härten lassen (US-A-40 83 901). Bei beiden Verfahren wird die Komplexverbindung aus Methylendianilin und Natriumchlorid in stöchiometrischen Mengen, bezogen auf die reaktiven Isocyanatgruppen des Polyurethanpräpolymers, kurz vor der Härtungsreaktion zugemischt.

Gegenstand der Erfindung ist ein Verfahren zur Herstellung eines hitze- und feuchtigkeitshärtenden 1-Komponenten-Polyurethan-Dicht- und Klebmittels auf der Basis von telechelen Isocyanat-Präpolymeren aus aromatischen Diisocyanaten in stöchiometrischem Überschuß, Polyolen und einem Katalysator für die Feuchtigkeitshärtung, welcher dadurch gekennzeichnet ist, daß man ein durch Erhitzen aktivierbares Vernetzungsmittel in Form einer mikroverkapselten polyamino- oder hydroxy-funktionellen Verbindung zusetzt.

Vorzugsweise wird das mikroverkapfelte, durch Erhitzen aktivierbare Vernetzungsmitel in deutlich unterstöchiometrischen Mengen eingesetzt.

Wenn bei der Applikation der erfindungsgemäß hergestellten Dicht- und Klebmittel ausreichend hohe absolute Luftfeuchtigkeit vorhanden ist, härten diese wie konventionelle einkomponentige Kleb- und Dichtmittel bei Raumtemperatur mit der Luftfeuchtigkeit überreschend schnell aus. Wenn jedoch die zur Verfügung stehende Luftfeuchtigkeit für eine rasche Aushärtung nicht ausreicht oder bereits sehr kurze Zeit nach der Applikation des Kleb-Dichtmittels höhere mechanische Festigkeiten gefordert werden, kann das blockierte Vernetzungsmittel durch kurzzeitiges Erhitzen aktiviert werden, so daß eine partielle Härtung im Zeitraum von wenigen Minuten erreicht wird. Die weitere Aushärtung zur Endfestigkeit erfolgt dann durch Weiterreaktion mit der Luftfeuchtigkeit. Dabei besteht zusätzlich die Möglichkeit, daß das Kleb-/Dichtmittel nur punktuell in einigen eng begrenzten Bereichen kurzzeitig erhitzt wird. Mit einem derartigen System bekommt der Anwender die Möglichkeit, die Härtungscharakteristiken des Klebeverbundes gezielt zu beeinflussen, ohne daß die Zusammensetzung des Kleb-/Dichtmittels verändert werden muß. Mit diesem System lassen sich insbesondere die oben geschilderten Probleme bei der Direktverglasung von Kraftfahrzeugen auf Montagebändern lösen, wegen des sehr geringen apparativen Aufwandes können die erfindungsgemäßen Dicht-/Klebmittel jedoch auch in Kraftfahrzeugwerkstätten bei dem Ersatz von Windschutzscheiben eingesetzt werden.

Obwohl der Einsatz in der Automobil-Industrie eine bevorzugte Anwendung darstellt, ist das erfindungsgemäß hergestellte Dicht- und Klebmittel überall dort günstig anzuwenden, wo in kurzer Zeit Anfangsfestigkeiten erforderlich sind, die die konventionellen feuchtigkeitshärtenden Materialien nicht erfüllen.

Die Polyurethanpräpolymeren werden auf an sich bekannte Weise aus überschüssigem aromatischen Diisocyanat und einem Polyol hergestellt. Geeignete aromatische Diisocyanate sind beispielsweise Diphenylmethandiisocyanat (MDI), Toluylendiisocyanat (TDI), Naphthalindiisocyanat, p-Phenylendiisocyanat und 1,3-bis(Isocyanatomethyl)benzol sowie m- oder p-Tetramethylxyloldiisocyanat (m-TMXDI bzw. p-TMXDI).

Als Polyolkomponente kommen Polyetherpolyole wie Polyethylenoxid, Polypropylenoxid, Polytetrahydrofuran und deren Copolymere sowie Polyesterpolyole und hydroxyfunktionelle Polycaprolactone in Betracht. Weiterhin können die in der EP-A-240698 beschriebenen verträglichen Mischungen aus Polyetherpolyolen, Polyesterpolyolen und niedermolekularen hydroxyfunktionellen Methacrylatpolymeren verwendet werden.

Die bevorzugten Katalysatoren für die Feuchtigkeitshärtung der aromatischen Isocyanatpräpolymeren sind Zinnverbindungen wie Zinn(II)octoat, Dibutylzinnlaurat und Dibutylzinnmaleat. Ferner sind Organo-Quecksilber, -Blei- und -Wismuthverbindungen wie z.B. Phenylquecksilberacetat oder Bleinaphthenat brauchbar. Mengen von 0,01 bis 1,0, vorzugsweise 0,02 bis 0,5 Gew.% finden Verwendung. Zusätzlich können die oben genannten Katalysatoren in bekannter Weise mit tertiären Aminen kombiniert werden.

Als thermisch aktivierbare Vernetzungsmittel werden polyamino- oder polyhydroxyfunktionelle Verbindungen eingesetzt, welche mikroverkapselt sind und dadurch bei Raumtemperatur für eine Reaktion mit dem Isocyanatpräpolymeren nicht zur Verfügung stehen. Die Funktionalität und das Molekulargewicht der polyamino- bzw. polyhydroxyfunktionellen Verbindungen richtet sich dabei nach den gewünschten mechanischen Eigenschaften des gehärteten Kleb-/Dichtstoffes. Vorzugsweise handelt es sich hierbei um niedermolekulare difunktionelle Amine oder Alkohole, da diese aufgrund ihres niedrigen Molekulargewichtes nur zu sehr geringen Prozentsätzen zugesetzt werden. Zur Verkapselung wird dabei das Vernetzungsmittel in genügend feine Teilchen dispergiert, anschließend wird auf diesen Kern des Vernetzungsmittels eine Schale eines geeigneten Polymers aufpolymerisiert. Beispiele für geeignete Polymere sind Polymethylmethacrylat, erzeugt durch radikalische Polymerisation oder Photopolymerisation, Polyurethane oder Polyharnstoffe, erzeugt durch Zusatz von flüssigen oder gelösten Polyisocyanaten, die dann mit der Oberfläche des Vernetzungsmittels zu einer festen Schale reagieren, und Polycyanacrylate, erzeugt durch Zusatz von Cyanacrylatmonomer, das in einer anionischen Polymerisation auf der Oberfläche mit dem Vernetzungsmittel reagiert. Weitere Möglichkeiten zur Erzeugung der inerten Schale um das Vernetzungsmittel sind die an sich bekannten Koazervationstechniken, mit denen auf der Oberfläche der Vernetzungsmittel Gelatineschalen erzeugt werden. Neben den hier aufgeführten Verfahren zur Erzeugung einer dichten Polymerschale um das Vernetzungsmittel sind viele weitere Polymere und Copolymere zur Erzeugung dieser Schale geeignet. Dabei sind folgende Auswahlkriterien zu beachten: Das Monomere soll möglichst sehr geringe Löslichkeit im Vernetzungsmittel haben und muß bei verhältnismäßig niedrigen Temperaturen zu vollständigem Umsatz polymerisierbar sein. Das so erzeugte Schalenpolymer muß einen Erweichungspunkt von über 60^{o}C haben und darf mit den übrigen Bestandteilen des Kleb-/Dichtmittels unterhalb von 60^{o}C nicht anquellen oder in ihnen löslich sein. Bei Temperaturen oberhalb von 90^{o}C soll dieses Schalenmaterial jedoch ausreichend erweichen oder anquellen, damit das Vernetzungsmittel freigesetzt werden kann.

Das Vernetzungsmittel hat vorzugsweise einen Schmelz- oder Erweichungspunkt zwischen 60 und 90^{o}C, so daß es während des Verkapselungsvorganges als sehr feinteilige Dispersion in einem inerten Lösungsmittel vorgelegt werden kann. Beispiele für derartige Vernetzungsmittel sind Diamine wie das Methylendianilin, 2,3-Di(4-aminophenyl)butan, Hexamethylendiamin und Dodecamethylendiamin. Beispiele für geeignete Diole sind Neopentylglykol, Hexandiol, Decandiol, Hydroxypivalinsäure-Neopentylglykolester sowie andere Polyesterdiole mit einem Schmelz- bzw. Erweichungsbereich zwischen 60 und 120^{o}C. Solche verkapselten Vernetzungsmittel weisen den Vorteil gegenüber den Salzkomplexen von Diaminen auf, daß sie keine Salze wie z.B. Kochsalz enthalten.

Das erfindungsgemäß erhöltliche Einkomponenten-Polyurethan-Dicht- und Klebmittel zeichnet sich dadurch aus, daß die beschriebenen Vernetzungsmittel nur zu einem geringen Prozentsatz zu an sich bekannten einkomponentigen feuchtigkeitshärtenden Kleb-/Dichtstoffen zugesetzt werden müssen. Dadurch werden deren gewünschte Eigenschaften wie z.B. ausgezeichnete Haftung auf lackiertem Metall und vorbehandeltem Glas, wie es für die Direkteinglasung von Automobilen unbedingt notwendig ist, nicht beeinflußt. Das erfindungsgemäße Einkomponenten-Polyurethansystem enthält weiterhin an sich bekannte Füllstoffe und Rheologie-Hilfsmittel. Dadurch besitzt das System ein extrem gutes Standvermögen, so daß es maschinell in der gewünschten Profilform auf die Glasscheiben oder auf die Flanschteile aufgetragen werden kann. Durch eine gezielte partielle Aushärtung an definierten Stellen des Glas/Metallverbundes kann die Scheibe nach Einsetzen in die Karosserie in sehr kurzer Zeit mit ausreichender Festigkeit fixiert werden, so daß ein Abgleiten verhindert wird. Die partielle An- bzw. Aushärtung des Kleb-/Dichtmittels macht ein zusätzliches mechanisches Fixieren der Glasscheibe unnötig. Die vollständige Aushärtung des Kleb-/Dichtmaterials geschieht anschließend durch die Reaktion mit der vorhandenen Luftfeuchtigkeit bei Raumtemperatur.

Die gezielte partielle Aushärtung kann z.B. durch das Anbringen von IR-Strahlern, wie sie z.B. zum Aushärten von wärmevernetzenden Lacken Verwendung finden, geschehen.

Besonders vorteilhaft kann die rasche Erhitzung des Dichtmittels zur Wärmehärtung mit Hilfe von Mikrowellen erreicht werden. Die Mikrowellenstrahlung hat den Vorteil, daß die elektromagnetische Energie direkt im Dichtmittel in Wärme umgewandelt wird, und nicht wie bei der IR-Strahlung mittels Wärmeleitung durch das zu verbindende Substrat hindurch das Dichtmittel erwärmt. Dadurch kann der An- bzw. Aushärtungsvorgang sehr stark verkürzt werden, was unter den Gegebenheiten der Montagebänder in der Automobilindustrie technisch sehr erwünscht ist. So ist es beispielsweise möglich, eine Autoscheibe nach dem Einsetzen in die Karosserie nur punktförmig durch lokales Erhitzen mit Hilfe einer geeigneten Mikrowellenquelle zu fixieren; die weitere Aushärtung erfolgt dann durch die feuchtigkeitshärtenden Eigenschaften des erfindungsgemäßen Kleb-/Dichtmittels, wie oben dargelegt wurde.

### Beispiel 1

In einer Mörsermühle wurde Dodecamethylendiamin auf eine Kornfeinheit < 100 µm gemahlen. In einer Apparatur aus Dreihalskolben, Umwälzpumpe und Photoreaktor, bestückt mit einer 250 W Quecksilberdampflampe wurden 60 g des Amins im Dreihalskolben zu einer 20% Festkörper enthaltenden wässrigen Disperson dispergiert. In einer Stickstoffatmosphäre tropfte zu dieser Dispersion unter ständigem Rühren 100 g Methylmethacrylat, in dem 0,1% eines Photoinitiators vom Benzoinethertyp gelöst war. Außerdem wurde die Dispersion ständig vom Photoreaktor in den Dreihalskolben und zurück umgepumpt. Nach drei Stunden war die Monomerzugabe beendet, zur vollständigen Polymerisation wurde die Dispersion noch weitere 2 Stunden lang durch den Photoreaktor gepumpt. Anschließend wurde das derart verkapselte Amin abfiltriert und im Hochvakuum getrocknet.

Eine 3%-ige Dispersion dieses Amins in einem Präpolymerweichmachergemisch aus
52,44% eines PU-Präpolymers aus einem Polyetherol und MDI mit reaktiven Isocyanatgruppen, Isocyanat-equivalentgewicht 3400
31,35% einer Mischung aus Ruß und feinteiligem Calciumcarbonat im Gewichtsverhältnis 2:1
14,97% C₇-C₁₁-Alkohol-Phthalat als Weichmacher
0,20% Nickel-dibutyldithiocarbamat
0,04% Dibutylzinnmaleat
zeigt eine voll befriedigende Lagerstabilität. Wird diese Mischung für 3 Minuten einer Mikrowellenbestrahlung bei einem Pul/Pausenverhältnis von 7,5/28,5 sec ausgesetzt, so ist sie nach dieser Zeit ausgehärtet, d.h. das verkapselte Amin ist für einen erfindungsgemäßen Kleb-/Dichtstoff geeignet.

### Beispiel 2

In einer Mörsermühle wurde Methylendianilin auf eine Kornfeinheit < 100µm gemahlen. In einem Dreihalskolben wurden 40 g des Amins unter Feucheitgkeitsausschluß in trockenem Petrolether zu einer 20%-igen Dispersion verteilt. Unter schnellem Rühren tropften innerhalb von 4 Stunden 28 g eines flüssigen Diphenylmethandiisocyanats (MDI, Isocyanatequivalentgewicht 143) zu dieser Dispersion. Nach weiteren drei Stunden Rühren war in der Dispersion IR-spektroskopisch kein Isocyanat mehr nachweisbar. Der feinteilige Feststoff wurde abfiltriert und im Vakuum getrocknet.

Eine 3%-ige Dispersion dieses mit Polyharnstoff verkapselten Amins in einer Präpolymer/Weichmachermischung zeigt ebenfalls vollbefriedigende Lagerstabilität und härtet unter Mikrowelleneinstrahlung innerhalb von 3 Minuten aus, d.h. das verkapselte Amin ist für den erfindungsgemäßen Kleb-/Dichtstoff geeignet.

## Patentansprüche

1. Verfahren zur Herstellung eines hitze- und feuchtigkeitshärtenden Einkomponenten-Polyurethan-Dicht- und Klebmittels auf Basis von telechelen Isocyanatpräpolymeren aus aromatischen Diisocyanaten im stöchiometrischen Überschuß, Polyolen und einem Katalysator für die Feuchtigkeitshärtung, dadurch gekennzeichnet, daß man ein durch Erhitzen aktivierbares Vernetzungsmittel in Form einer mikroverkapselten polyamino- oder hydroxyfunktionellen Verbindung zusetzt.

2. Verfahren nach Anspruch 1, dadurch gekennzeichnet, daß man als Katalysator eine Zinnverbindung zusetzt.

3. Verfahren nach Anspruch 1, dadurch gekennzeichnet, daß man eine polyamino- oder hydroxyfunktionelle Verbindung verwendet, die bei Raumtemperatur fest, bei Temperaturen oberhalb 60°C jedoch flüssig ist.

4. Verfahren nach einem der Ansprüche 1 bis 3, dadurch gekennzeichnet, daß man die Schale der Mikrokapseln aus einem Poly(meth)acrylat, insbesondere Polymethylmethacrylat erzeugt.

5. Verwendung des nach dem Verfahren der Ansprüche 1 bis 4 hergestellten Dicht- und Klebmittels zur Direktverglasung von Kraftfahrzeugen.

6. Verwendung nach Anspruch 5, dadurch gekennzeichnet, daß man das Dichtmittel durch Erhitzen zumindest stellenweise zum Härten bringt und dann unter Feuchtigkeitseinfluß aushärten läßt.

7. Verwendung gemäß Anspruch 5 oder 6, dadurch gekennzeichnet, daß das Erhitzen mit Hilfe von Mikrowellen erfolgt.

## Claims

1. A process for the preparation of a heat and moisture hardening one-component polyurethane sealant and adhesive based on telechelic isocyanate prepolymers made from aromatic diisocyanates in stoichiometric excess, polyols and a catalyst for moisture-hardening, characterized in that a cross-linking agent which can be activated by heating, in the form of a microencapsulated polyamino- or hydroxy-functional compound, is added.

2. A process according to Claim 1, characterised in that a tin compound is added as catalyst.

3. A process according to Claim 1, characterised in that a polyamino- or hydroxy-functional compound is used which is solid at room temperature but liquid at temperatures above 60°C.

4. A process according to one of Claims 1 to 3, characterised in that the shell of the microcapsules is produced from a poly(meth)acrylate, in particular polymethylmethacrylate.

5. Use of the sealant and adhesive prepared by the process in Claims 1 to 4 for the direct glazing of motor vehicles.

6. Use according to Claim 5, characterised in that the sealant is hardened by heating, at least in places, and then allowed to cure under the effects of moisture.

7. Use according to Claim 5 or 6, characterised in that heating takes place with the aid of microwaves.

## Revendications

1. Procédé de préparation d'un joint et d'un adhésif en polyuréthanne mono-composant réticulant à la chaleur et à l'humidité à base de prépolymères isocyanates téléchéliques de diisocyanates aromatiques en excès stoechiométrique, de polyols et d'un catalyseur de réticulation par l'humidité, caractérisé en ce qu'on ajoute un agent de réticulation activable par la chaleur sous forme d'un composé polyamino- ou hydroxyfonctionnel.

2. Procédé selon la revendication 1, caractérisé en ce qu'on ajoute comme catalyseur un composé d'étain.

3. Procédé selon la revendication 1, caractérisé en ce qu'on utilise un composé polyamino- ou hydroxyfonctionnel qui est solide à température ambiante mais est liquide à des températures supérieures à 60°C.

4. Procédé selon l'une des revendications 1 à 3, caractérisé en ce qu'on réalise la pellicule des microcapsules en un polyméthacrylate, notamment en poly(méthacrylate de méthyle).

5. Utilisation du joint/adhésif préparé selon le procédé des revendications 1 à 4 pour le montage direct des glaces de véhicules automobiles.

6. Utilisation selon la revendication 5, caractérisé en ce qu'on fait réticuler le joint par chauffage au moins par zones et qu'ensuite, on laisse réticuler sous l'effet de l'humidité.

7. Utilisation selon les revendications 5 ou 6, caractérisée en ce que le chauffage est réalisé à l'aide de micro-ondes.
